# EUROPÄISCHE PATENTSCHRIFT

(11) **EP 1 504 194 B1**
(45) Veröffentlichungstag und Bekanntmachung des Hinweises auf die Patenterteilung: **27.12.2006**
(21) Anmeldenummer: 03735287.9
(22) Anmeldetag: 07.05.2003
(51) Int. Cl.: F15B 1/02

(54) **HYDRAULIKSYSTEM MIT DRUCKABHÄNGIGER DÄMPFUNG**
HYDRAULIC SYSTEM COMPRISING PRESSURE-CONTROLLED DAMPING MEANS
SYSTEME HYDRAULIQUE AVEC DISPOSITIF D'AMORTISSEMENT DEPENDANT DE LA PRESSION

(30) Priorität: 14.05.2002 DE 10221276
(43) Veröffentlichungstag der Anmeldung: 09.02.2005
(73) Patentinhaber: Eaton Fluid Power GmbH, 76532 Baden-Baden (DE)
(72) Erfinder: ZIMPFER, Michael, 76275 Ettlingen (DE)
(74) Vertreter: Rüger, Barthelt & Abel Patentanwälte
(86) Internationale Anmeldenummer: PCT/DE2003/001455
(87) Internationale Veröffentlichungsnummer: WO 2003/095845

(56) Entgegenhaltungen:
- DE-A- 19 622 762
- US-A- 5 191 826
- PATENT ABSTRACTS OF JAPAN vol. 1996, no. 07, 31. Juli 1996 (1996-07-31) & JP 08 061304 A (SHIN CATERPILLAR MITSUBISHI LTD), 8. März 1996 (1996-03-08)

## Beschreibung

Die Erfindung betrifft ein Druckmittel-Kraftübertragungssystem, wie beispielsweise ein Hydrauliksystem und dessen Dämpfereinrichtung.

In Kraftübertragungssystemen, die ein kompressibles oder ein inkompressibles Druckmittel zur Kraftübertragung nutzen, d.h. in Pneumatiksystemen oder Hydrauliksystemen kommen zwischen der entsprechenden Druckquelle und der Last häufig Pulsationsdämpfer zum Einsatz, die von der Druckquelle oder dem Verbraucher herrührende Pulsationen dämpfen sollen. Solche Pulsationsdämpfer sind beispielsweise Dehnschläuche, die außerdem Einbauten, wie beispielsweise Resonanzrohre oder Reflektoren, zur Erzeugung von Druckwelleninterferenzen zur Auslöschung derselben enthalten können. Solche Dämpfungseinrichtungen sind zwischen die Druckquelle und den Verbraucher geschaltet.

Druckrnittel-Kraftübertragungssysteme werden häufig in Fällen eingesetzt, in denen die Last variiert, d.h. zeitlich nicht konstant ist. Ebenso kann die Förderung der Druckquelle beispielsweise Motordrehzahl abhängig schwanken.

Dämpfereinrichtungen weisen einen spezifischen Strömungswiderstand auf, der zu Energieverlusten im Kraftübertragungssystem führen kann. Diese spielen bei Wirtschaftlichkeitsbetrachtungen eine Rolle. Andererseits kann auf Dämpfereinrichtungen nicht ohne Weiteres verzichtet werden.

Darüber hinaus sind Dämpfereinrichtungen häufig lediglich für ein mehr oder weniger breites Band von Druckpulsationen wirksam. Sollen alle in allen denkbaren Betriebszuständen vorkommenden Druckpulsationen von der Dämpfereinrichtung eliminiert werden, ist eine umfangreiche Dämpfereinrichtung mit entsprechend hohem Strömungswiderstand die Folge.

Aus der DE-A-196 22 762 A1 ist eine hydraulische Hebeeinrichtung mit variabler Dämpfung bekannt. Die Hebeeinrichtung dient zur Niveauregulierung für Anbaugeräte an Traktoren. Sie weist einen Hubzylinder auf, der über verschiedene Hebel eine Last heben und tragen kann. Der Hubzylinder wird von einer Druckquelle über ein gesteuertes Ventil mit Hydraulikfluid gefüllt, so dass er die Last anhebt. Über eine abzweigende Leitung und ein in dieser angeordnetes Ventil ist ein Druckpuffer angeordnet. Das Ventil kann zwischen einer dämpfenden oder abgesperrten Stellung und einer Durchlassstellung umschalten. In einer ersten Ausführungsform erfolgt die Umschaltung niveauabhängig, so dass bei abgesenkter Last eine im Wesentlichen starre Verbindung zwischen der Last und dem Traktor und bei angehobener Last eine gefederte Verbindung zwischen der Last und dem Traktor besteht. In einer abgewandelten Ausführungsform ist zusätzlich ein normalerweise offenes, druckgesteuertes Ventil vorgesehen, das den Druckpuffer mit dem Hydraulikzylinder verbindet. Dieses Ventil überwacht den Druck in dem Druckpuffer. Es schließt wenn der Druck in dem Druckpuffer einen Grenzwert übersteigt. Damit wird dieser vor zu großen Druckspitzen geschützt.

Davon ausgehend ist es Aufgabe der Erfindung ein Druckmittel-Kraftüberträgungssystem zu schaffen, das mit guter Wirtschaftlichkeit arbeitet und Druckpulsationen auf ein erträgliches Minimum reduziert.

Diese Aufgabe wird mit dem Druckmittel-Kraftübertragungssystem nach Anspruch 1 gelöst:

Das erfindungsgemäße Druckmittel-Kraftübertragungssystem ist beispielsweise als Hydrauliksystem ausgebildet. Es weist eine Druckquelle und einen Verbraucher auf, zwischen denen eine Dämpfereinrichtung angeordnet ist. Diese weist wenigstens zwei zueinander parallele Kanäle mit unterschiedlichen Dämpfungseigenschaften auf. Beispielsweise enthält einer der Kanäle ein oder mehrere Pulsationsdämpfer während der andere Kanal anders abgestimmte Pulsationsdämpfer enthält oder auch als Bypasskanal ausgebildet ist, der frei von Pulsationsdämpfern oder sonstigen Dämpfern ist. Den Kanälen ist ein Ventilmittel zugeordnet, das die Fluidverteilung auf die Kanäle in Abhängigkeit von dem Druck an einer ausgewählten Stelle der Dämpfereinrichtung beeinflusst. Damit wird zumindest einer der Kanäle druckabhängig aktiviert, d.h. geöffnet oder geschlossen oder auch mehr oder weniger freigegeben. Dadurch ändern sich die Eigenschaften der Dämpfereinrichtung in Abhängigkeit von dem Druck an einer ausgewählten Stelle des Kraftübertragungssystems. So wird es ermöglicht, bei bestimmten Betriebszuständen der Kraftübertragungseinrichtung mit höherer Dämpfung und bei wieder anderen Betriebszuständen mit niedrigerer Dämpfung zu arbeiten. Mit der Änderung der Dämpfung geht in der Regel eine Änderung des Durchflusswiderstands der Dämpfereinrichtung einher. Bei dem erfindungsgemäßen Kraftübertragungssystem ist es deshalb möglich, den Durchflusswiderstand der Dämpfereinrichtung an Betriebszustände des Kraftübertragungssystems, insbesondere an Lastverhältnisse anzupassen. Beispielsweise kann das Kraftübertragungssystem als Hydrauliksystem in Kraftfahrzeugen Anwendung finden. Bei Geradeausfahrt, bei der keine Lenkunterstützung erforderlich ist, kann ein in der Dämpfereinrichtung vorgesehener, als Bypass dienender Kanal freigegeben werden. Das Kraftübertragungssystem befindet sich im Umlaufbetrieb, so dass es hier auf die Dämpfung nicht ankommt. Der geringere Strömungswiderstand im Bypasskanal hat aber bei diesem Betriebszustand zur Folge, dass zur Aufrechterhaltung des Umlaufbetriebs nur geringe Leistung erforderlich ist, so dass der Motor des Kraftfahrzeugs durch die Hydraulikpumpe (Druckquelle) nur gering belastet wird.

Beginnt ein Lenkvorgang nimmt der Strömungswiderstand der hydraulischen Stelleinrichtung zu, die zur Lenkunterstützung dient. Entsprechend erhöht sich der Druck in oder an der Dämpfereinrichtung. Dieser Druck schaltet das Ventilmittel nun vorzugsweise plötzlich oder bedarfsweise auch gleitend um, so dass der Bypasskanal oder ein anderer beim Umlaufbetrieb des Hydrauliksystem genutzter Kanal mit niedrigem Strömungswiderstand nun mehr und mehr gedrosselt wird. Zunehmend muss somit Fluid durch den parallelen Kanal fließen, der wenigstens einen Pulsationsdämpfer enthält. Damit werden Pulsationen, Druckstöße und Schwingungen, die von der Druckquelle herrühren können, von dem Verbraucher fern gehalten. Umgekehrt werden Pulsationen, Schwingungen und Druckstöße, die von dem Verbraucher ausgehen können, von der Druckquelle fern gehalten. Leistungsverluste, die an den Dämpfern der Dämpfereinrichtung auftreten können, werden somit weitgehend auf nur kurzfristig auftretende Lenkvorgänge beschränkt. Ähnlich kann bei einer hydraulischen Niveauregulierung vorgegangen werden.

Das erfindungsgemäße Kraftübertragungssystem aktiviert seine Dämpfer somit nur dann, wenn tatsächlich eine Leistungsübertragung zwischen der Druckquelle und dem Verbraucher stattfindet. Im Lehrlaufbetrieb (Umlaufbetrieb), d.h. wenn keine nennenswerte Leistung von der Druckquelle auf den Verbraucher übertragen wird, werden Dämpfer, die Energieverluste mit sich bringen können, zumindest teilweise deaktiviert.

Weiter ermöglicht es das erfindungsgemäße Kraftübertragungssystem, die Pulsationsdämpfer vor allem dann zu nutzen, wenn auch tatsächlich Pulsationen auftreten. Dies ist beispielsweise lastabhängig. Außerdem kann sich das Frequenzspektrum der Pulsationen lastabhängig ändern. Auch hier bietet das erfindungsgemäße Kraftübertragungssystem die Möglichkeit, jeweils auf die auftretenden Pulsationen abgestimmte Pulsationsdämpfer abhängig vom Betriebszustand des Kraftübertragungssystems ein- und auszuschalten.

Die Dämpfereinrichtung kann zwei oder mehr Kanäle aufweisen, die zueinander parallel geschaltet sind. Sie können jeweils an ihren Eingängen miteinander verbunden sein und am Ausgang umgeschaltet werden oder am Ausgang miteinander verbunden sein und am Eingang umgeschaltet werden. Zur Umschaltung können Umschaltventile genutzt werden. Bei bevorzugten Ausführungsformen ist in dem zu deaktivierenden Kanal jedoch lediglich ein Sperrventil angeordnet, das beispielsweise bei Druckerhöhung schließt. Dieses Sperrventil ist vorzugsweise in dem Kanal vorgesehen, der von beiden Kanälen den niedrigeren Strömungswiderstand aufweist. Dieser kann als Bypasskanal angesehen werden, der beispielsweise bei Druckerhöhung des Systems allmählich gesperrt wird.

Prinzipiell ist es wie erwähnt möglich, die Kanäle sprungartig zu aktivieren oder zu deaktivieren. Dies kann jedoch zu einer merklichen Änderung des Verhaltens des Gesamtsystems führen. Beispielsweise kann dies bei einem hydraulisch unterstützten Lenksystem eines Kraftfahrzeugs Schwierigkeiten bereiten, wenn sich dadurch der Grad der Lenkunterstützung sprunghaft ändert. In solchen Fällen wird ein gleitender Übergang zwischen aktivieren und deaktivieren eines Kanals bevorzugt. Bei gleitender Arbeitsweise erfolgt die Überblendung oder Umschaltung zwischen den Kanälen vorzugsweise im Wesentlichen hysteresefrei. Dem gegenüber ist es bei schaltendem Übergang vorteilhaft, eine gewisse Schalthysteresis vorzusehen, um Schwingungszustände, d.h. ein ständiges Hin- und Herschalten des.Ventilmittels bei Grenzzuständen zu vermeiden.

Zur Umschaltung des Ventilmittels dient vorzugsweise ein Druckabgriff an der Dämpfereinrichtung oder an einer anderen Stelle des Kraftübertragungssystems. Der Druck kann über eine geeignete druckbetätigte Antriebseinrichtung in ein Stellsignal für das Ventilmittel umgewandelt werden. Die Betätigungseinrichtung enthält vorzugsweise ein Federmittel, das eine Gegenkraft erzeugt. In vielen Fällen ist es ausreichend wenn das Federmittel eine lineare Kraft-Weg-Kennlinie aufweist. In Einzelfällen kann es zweckmäßig sein, eine nichtlineare Kraft-Weg-Kennlinie vorzusehen. Damit lässt sich eine nichtlineare Ventilkennlinie kompensieren. In wieder anderen Fällen kann es auch gerade gewünscht sein, mit nichtlinearer Charakteristik zwischen beiden Kanälen umzuschalten.

Weitere Einzelheiten vorteilhafter Ausführungsformen der Erfindung ergeben sich aus der Zeichnung, der Beschreibung oder Unteransprüchen.

In der Zeichnung sind Ausführungsbeispiele der Erfindung veranschaulicht. Es zeigen:
- Figur 1: ein erfindungsgemäßes Druckmittel-Kraftübertragungssystem in schematisierter Darstellung und
- Figur 2 - 5: abgewandelte Ausführungsformen von erfindungsgemäßen Kraftübertragungssystemen jeweils in schematisierter Darstellung.

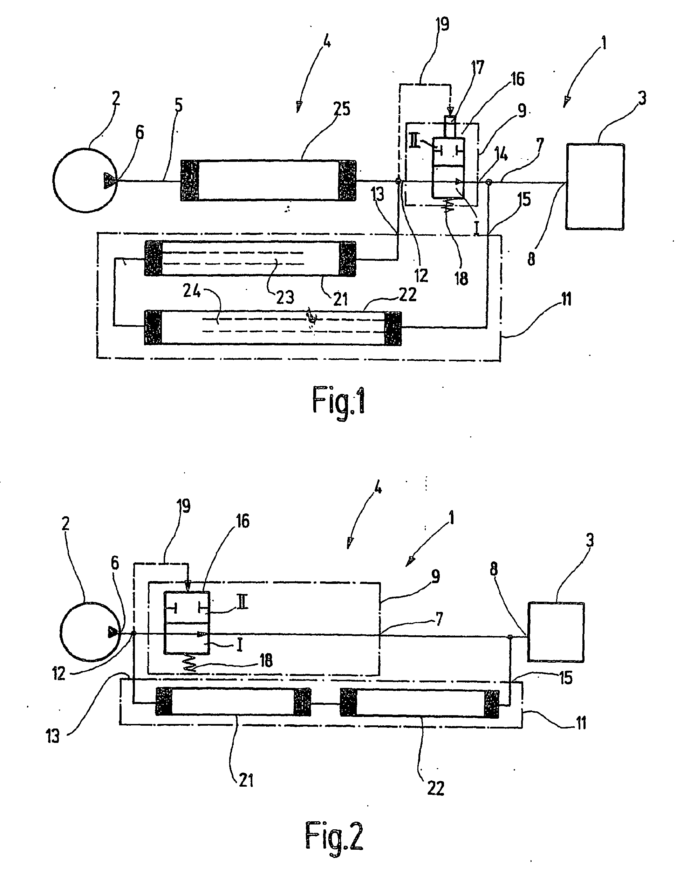

In Figur 1 ist ein Hydrauliksystem 1 veranschaulicht, das als Druckmittel ein inkompressibles Fluid, wie beispielsweise Hydrauliköl, nutzt. Dieses dient zur Übertragung mechanischer Leistung von einer Druckquelle 2 zu einem Verbraucher 3. Das Hydrauliksystem 1 ist somit ein Druckmittel-Kraftübertragungssystem. Die Druckquelle 2 ist beispielsweise eine an einem.Kraftfahrzeug vorgesehene Hydraulikpumpe. Der Verbraucher 3 ist beispielsweise ein Lenkgetriebe, ein Ventilblock oder eine anderweitige von der Druckquelle 2 anzutreibende Last. Zwischen der Druckquelle 2 und dem Verbraucher 3 ist eine Dämpfereinrichtung 4 vorgesehen. Diese ist mit ihrem Eingang 5 an einen Ausgang 6 der Druckquelle 2 angeschlossen. Ihr Ausgang 7 ist an einen Eingang 8 des Verbrauchers 3 angeschlossen. Eine von dem Verbraucher zu der Druckquelle 2 rückführende Leitung ist vorhanden, jedoch nicht weiter veranschaulicht (dies gilt für die Figuren 1 bis 5).

Die Dämpfereinrichtung 4 enthält zumindest zwei Kanäle 9, 11, die zueinander parallel angeordnet sind. Dazu sind die Kanäle 9, 11 mit ihren Eingängen 12, 13 sowie mit ihren Ausgängen 14, 15 miteinander verbunden. Der Kanal 9 ist als Bypasskanal ausgebildet und enthält bei dieser Ausführungsform keine Dämpfer oder dergleichen. Er enthält jedoch ein Sperrventil 16, das als Ventilmittel zur Aufteilung des Hydraulikfluids zwischen den Kanälen 9, 11 dient. Das in dem Bypasskanal (Kanal 9) angeordnete Sperrventil 16 weist einen ersten Zustand I auf, in dem es vollständig offen ist und den Kanal 9 freigibt und einen zweiten Zustand II auf, in dem es den Kanal 9 sperrt. Außerdem kann es beliebige Zwischenzustände einnehmen, in der es den Kanal 9 lediglich mehr oder weniger drosselt. Das Sperrventil 16 ist druckmittelbetätigt. Es weist einen Druckmittelantrieb 17, der, wenn er mit Druck beaufschlagt wird, das Sperrventil 16 in Schließrichtung gegen die Kraft einer Druckfeder 18 betätigt. Der Druckmittelantrieb 17 ist über eine Leitung 19 beispielsweise mit dem Eingang 12 des Kanals 9 verbunden. Bedarfsweise kann die Leitung 19, z.B. zur Vermeidung einer Schalthysterese, auch mit dem Ventilausgang verbunden sein.

Der Kanal 11 enthält zumindest ein, hier jedoch zwei, Dämpfer 21, 22, die in Serie angeordnet sind. Die beiden Dämpfer 21, 22 sind beispielsweise Pulsationsdämpfer, die jeweils einen Dehnschlauch sowie ein in dem Dehnschlauch angeordnetes Tunerrohr 23, 24 aufweisen. Jeder Dämpfer 21, 22 ist auf eine bestimmte Pulsationsfrequenz oder ein Frequenzband abgestimmt.

Den beiden parallel geschalteten Kanälen 9, 11 kann ein gemeinsamer Dämpfer 25 vorgeschaltet sein, der den Eingang der Dämpfereinrichtung 4 mit den Eingängen 12, 13 der Kanäle 9, 11 verbindet. Der Dämpfer 25 kann ein schmal- oder breitrandig abgestimmter Pulsationsdämpfer sein.

Das insoweit beschriebene Hydrauliksystem 1 arbeitet wie folgt:

In Betrieb fördert die Druckquelle 2 ständig Hydraulikfluid. Wenn der Verbraucher 3 keine Leistung abnimmt, lässt er dieses an seinem Eingang 8 ankommende Fluid ungehindert passieren und über eine nicht veranschaulichte Rückführungsleitung zu der Druckquelle 2 zurück strömen. Das Hydrauliksystem arbeitet im Umlaufbetrieb. In diesem Zustand ist der von der Leitung 19 abgegriffene Druck in der Dämpfereinrichtung 4 gering. Das Sperrventil 16 befindet sich somit in seinem Zustand I, d.h. es gewährt ungehinderten Durchgang in den Kanal 9. Das Hydraulikfluid nimmt somit seinen Weg über den Dämpfer 25 und dann durch den als Bypass geschalteten Kanal 9 zu dem Verbraucher 3. Der ebenfalls offene Kanal 11 wird wegen seines höheren Strömungswiderstands vergleichsweise schwächer durchströmt. Die Druckquelle 2 benötigt somit zur Aufrechterhaltung des Hydraulikkreislaufs nur geringe Leistung.

Der Verbraucher 3 ist wie oben erläutert beispielsweise ein Hydraulikaktuator zur Unterstützung der Lenkbewegung eines Kraftfahrzeugs. Wird dieser aktiviert, indem eine Lenkbewegung ausgeführt wird, setzt er dem durchflie-ßenden Hydraulikfluid einen zunehmenden Widerstand entgegen. Damit steigt der Druck in der Dämpfereinrichtung und zwar insbesondere an dem Eingang 12 des Kanals 9 merklich an. Dieser Druck bewirkt über den Druckmittelantrieb 17 einen beginnenden Schließvorgang des Sperrventils 16. Der Kanal 9 wird somit zunehmend gedrosselt, wodurch mehr und mehr Fluid gezwungen wird, den Weg durch den Kanal 11 und somit über die Dämpfer 21, 22 zu nehmen. Somit wird sicher gestellt, dass mit zunehmender Leistungsübertragung auch eine Pulsationsdämpfung zwischen der Druckquelle 2 und dem Verbraucher 3 stattfindet. Wenn das Sperrventil 16 bei maximalem Gegendruck vollständig geschlossen ist, ist der Kanal 9 abgesperrt. Es ist dann nur der Kanal 11 aktiv. Es wird mit voller Pulsationsdämpfung gearbeitet. Der Zusammenhang zwischen dem über die Leitung 19 abgegriffenen Druck und der Fluidverteilung auf die Kanäle 9, 11 lässt sich durch Auswahl einer geeigneten Kraft-Weg-Kennlinie der Druckfeder 18 einstellen.

Wird der Verbraucher 3 deaktiviert, beispielsweise indem die Lenkung wieder auf Geradeausfahrt gestellt wird, kann das Hydraulikfluid wiederum.ungehindert durch den Verbraucher 3 fließen. Der von der Leitung 19 abgegriffene Druck sinkt somit und der Kanal 9 wird mit abfallendem Druck wieder freigegeben. Das System kehrt somit in einen Umlaufbetrieb mit niedrigerer Pulsationsdämpfung zurück. Dieser Betrieb ist verlustarm und wird solange beibehalten, bis der Verbraucher 3 wiederum aktiv wird.

Alternativ kann die Leitung 19 zu dem Ausgang 7 führen, um Mitkopplungseffekte auszuschließen oder zu reduzieren. Dies vermeidet allerdings auch jegliche Hysteresis, die zur Vermeidung von Schwingungen in einigen Fällen wünschenswert ist.

In Figur 2 ist eine abgewandelte Ausführungsform des Hydrauliksystems 1 veranschaulicht. Sie unterscheidet sich von der vorstehend beschriebenen Ausführungsform durch die Weglassung des Dämpfers 25. Dies führt zu einem ungedämpften und dabei aber sehr verlustarmen Umlaufbetrieb, wenn der als Bypass dienende Kanal 9 vollständig offen ist, d.h. bei fehlender Leistungsabnahme an dem Verbraucher 3. Wegen der ansonsten vollständigen Übereinstimmung wird im Weiteren auf die vorstehende Beschreibung und der Zugrundelegung gleicher Bezugszeichen verwiesen. Die Anzahl der Dämpfer in dem Kanal 11 kann bedarfsentsprechend variieren. Das Ventil 16 kann in oder vor dem Kanal 9 angeordnet sein.

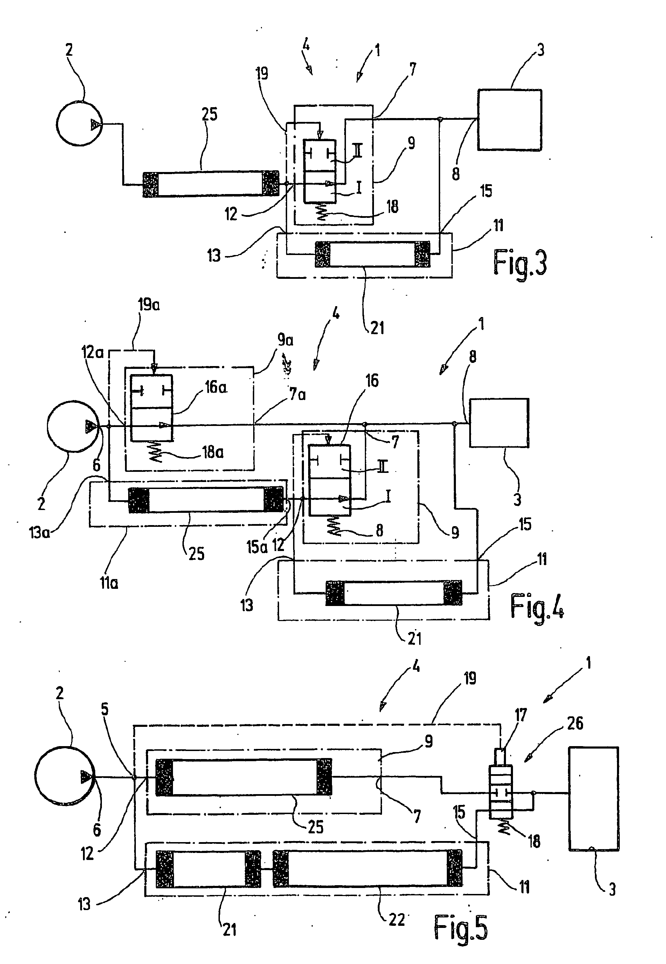

Eine weitere mögliche Abwandlung des Hydrauliksystems 1 nach Figur 1 ist in Figur 3 veranschaulicht. Es wird wiederum vollständig auf die Beschreibung des Ausführungsbeispiels nach Figur 1 verwiesen. Es werden gleiche Bezugszeichen zugrunde gelegt. Im Unterschied zu der Ausführungsform nach Figur 1 weist das Hydrauliksystem 1 nach Figur 3 in dem Kanal 11 lediglich einen Pulsationsdämpfer 21 auf. Dessen Durchflusswiderstand ist wesentlich größer als der des offenen Kanals 9, so dass er einen wesentlich größeren Druckabfall verursacht. Bei offenem Kanal 9 (Umlaufbetrieb) ist deshalb nur die Summe aus dem Durchflusswiderstand des Dämpfers 25 sowie des wesentlich geringeren Durchflusswiderstands des Kanal 9 wirksam. Der Druckabfall zwischen der Druckquelle 2 und dem Verbraucher 3 wird somit im Wesentlichen von dem Druckabfall an dem Dämpfer 25 bestimmt. Nimmt die Last 3 jedoch Leistung ab, wird der Kanal 9 mehr und mehr geschlossen, so dass der Dämpfer 21 aktiv wird. Der Druckabfall der Dämpfereinrichtung 4 addiert sich nun zu dem Druckabfall des Dämpfers 21, so dass ein erhöhter Druckabfall aber auch eine erhöhte Pulsationsdämpfung vorhanden ist.

Eine weiter abgewandelte Ausführungsform des Hydrauliksystems 1 ist aus Figur 4'ersichtlich. Bei dieser Ausführungsform sind die beiden Dämpfer 25, 21 jeweils von einem Bypasskanal überbrückt, der offen ist so lange das System im Umlaufbetrieb arbeitet. Die Dämpfer 21, 25, die lediglich dann eingeschaltet werden, wenn der Verbraucher 3 mechanische Leistung abnimmt, können auf eine hohe Pulsationsdämpfung ausgelegt sein. Die damit einhergehenden Druckverluste treten nur während der in der Regel relativ kurzzeitigen Phasen der Leistungsabnahme auf, so dass sie hinsichtlich der Energiebilanz des Systems vernachlässigbar sind. Im Umlaufbetrieb sind sie hingegen unwirksam.

Im Einzelnen ist der Dämpfer 21 Teil des Kanals 11, zu dessen Beschreibung und Funktion auf die Beschreibung im Zusammenhang mit Figur 3 verwiesen wird. Gleiches gilt für den Kanal 9. Im Unterschied zu dieser bildet der Dämpfer 25 jedoch einen Kanal 11a, dem ein Kanal 9a zugeordnet ist. Der Eingang 13a des Kanals 11a ist mit dem Eingang 12a des Kanals 9a verbunden. Beide liegen an dem Ausgang 6a der Druckquelle 2. Während der Ausgang 15a des Kanals 11a mit den Eingängen 12, 13 der Kanäle 9, 11 verbunden ist, ist der Ausgang 7a des Kanals 9a mit dem Ausgang 7 des Kanals 9 verbunden. Der Kanal 9a bildet somit einen Bypass, der die Dämpfereinrichtung 4 im Ganzen überbrückt. Er wird gesteuert von dem Ventil 16a, das über eine Druckleitung 19a mit dem Ausgang der Druckquelle 2 verbunden ist.

Dieses Hydrauliksystem 1 ist so beschaffen, dass im Umlaufzustand beide Sperrventile 16, 16a offen sind. Es ist ein niedriger Druckabfall vorhanden. Eine Pulsationsdämpfung wird nicht unternommen. Nimmt nun die Last 3 in Folge entsprechender Ansteuerung Leistung ab entsteht in dem Hydrauliksystem 1 ein Gegendruck, der zunächst das Ventil 16a zu schließen veranlasst. Damit wird:zunehmend der Dämpfer 25 aktiviert. Bei weiterem Anstieg des Gegendrucks schließt auch das Ventil 16, wodurch nun auch der Dämpfer 21 aktiviert wird. Damit nimmt mit zunehmender Leistungsabnahme auch die Pulsationsdämpfung zu. Die Sperrventile 16, 16a können dabei durch Bemessung der Druckfedern 18, 18a so bemessen sein, dass sie nacheinander sperren oder dass sie einen Überschneidungsbereich festlegen, in dem das Sperrventil 16 zu schließen beginnt, während das Sperrventil 16a sich mehr und mehr an seinen vollständig geschlossenen Zustand II annähert.

Auch bei diesem System, das eine sehr hohe Pulsationsdämpfung gestattet, wird diese nur während Phasen der Leistungsübertragung abgerufen. Auftretende Dämpfungsverluste werden somit auf diese kurzzeitigen Phasen begrenzt.

Eine weiter abgewandelte Ausführungsform des Hydrauliksystems 1 ist aus Figur 5 zu entnehmen. Es wird unter Zugrundelegung gleicher Bezugszeichen auf die Beschreibung des Hydrauliksystems nach Figur 1 verwiesen. Der im Nachfolgenden erläuterte Unterschied besteht in der Anordnung und Ausbildung des Ventilmittels. Als solches ist ein Umschaltventil 26 vorgesehen, das alternativ die Ausgänge der Kanäle 9, 11 mit dem Verbraucher 3 verbindet. Außerdem ist der Kanal 9 kein reiner Bypasskanal sondern er enthält das Dämpferelement 25. Dieses kann bedarfsweise auch entfallen. Die Druckleitung 19 kann je nach Bedarf mit dem Eingang 5 der Dämpfereinrichtung 4 oder mit einer anderen Stelle des Hydrauliksystems 1 verbunden sein.

Hydrauliksysteme 1 enthalten in der Regel Dehnschlauchleitungen und andere Dämpferelemente 21, 22, die je nach generierter Druckpulsation mit ein oder mehreren, in Reihe geschalteten Schlauchkammern versehen sind. Diese stellen Strömungswiderstände sowie eine Nachgiebigkeit und eine Trägheit des Systems dar, die eingeleitete Drucksignale dämpfen. Häufig erhöht sich die Pulsation der Pumpe mit steigendem statischen Druck, d.h. beispielsweise mit der Größe oder Heftigkeit der Lenkvorgänge oder mit dem Unterstützungsgrad eines hydraulisch aktiven Unterstützungssystems. Pulsationen können durch Dämpfungsmaßnahmen gemindert werden, wodurch der Druckverlust und somit die Verlustenergie steigt. Hier hilft die Erfindung ab, indem bei Betrieb eines hydraulischen Kreislaufs die Dämpfungsmaßnahmen abhängig vom Druck zugeschaltet werden. Dadurch ist im Umlaufbetrieb ein niedriger Druckverlust und eine erhebliche Energieeinsparung möglich. Erreicht wird dies durch eine direkte, die Dämpfer überbrückende Leitungsverbindung zwischen Druckquelle 2 und Verbraucher 3. Diese Kurzschlussleitung wird durch ein Ventil gesperrt, wenn ein Druckanstieg im System auftritt. Weil der am Dämpfer auftretende Druckverlust nur noch sehr kurzzeitig auftritt, können für diese kurzen Zeitabschnitte Dämpfungsglieder mit starker Dämpfung und hohem Druckverlust verwendet werden, die die Druckschwankungen sehr stark dämpfen. Dennoch kann im zeitlichen Mittel eine verbesserte Energiebilanz erreicht werden.

## Patentansprüche

1. Druckmittel-Kraftübertragungssystem, insbesondere Hydrauliksystem (1),
mit einer Druckquelle (2) und mit einer Last (3) sowie
mit einer zwischen der Druckquelle (2) und der Last (3) angeordneten Dämpfereinrichtung (4), die wenigstens zwei zueinander parallele Kanäle (9, 11) mit unterschiedliche Strömungswiderstände aufweist, die die Druckquelle (2) mit der Last (3) verbinden und über ein Ventilmittel (16, 26) gesteuert sind, **dadurch gekennzeichnet, dass** das Druckmittel-Kraftübertragungssystem die Fluidverteilung auf die Kanäle (9, 11) in Abhängigkeit von dem Druck an einer ausgewählten Stelle des Kraftübertragungssystems beeinflusst, indem es den Kanal (9) mit dem niedrigeren Strömungswiderstandsperrt, wenn der Druck in der Dämpfereinrichtung austeigt.

2. Druckmittel-Kraftübertragungssystem nach Anspruch 1, **dadurch gekennzeichnet, dass** wenigstens einer der Kanäle (9, 11) einen Pulsationsdämpfer (21) enthält.

3. Druckmittel-Kraftübertragungssystem nach Anspruch 1, **dadurch gekennzeichnet, dass** beide Kanäle (9, 11) jeweils wenigstens einen Pulsationsdämpfer (25, 21) aufweisen.

4. Druckmittel-Kraftübertragungssystem nach Anspruch 3, **dadurch gekennzeichnet, dass** die Pulsationsdämpfer (25, 21) unterschiedliche Pulsationsdämpfungseigenschaften aufweisen.

5. Druckmittel-Kraftübertragungssystem nach Anspruch 1, **dadurch gekennzeichnet, dass** jeder Kanal (9, 11) jeweils einen Kanaleingang (12, 13) und jeweils einen Kanalausgang (7, 15) aufweist, dass die Kanalausgänge (7, 15) untereinander verbunden sind und dass die Kanaleingänge (12, 13) über das Ventilmittel (16) miteinander verbunden sind.

6. Druckmittel-Kraftübertragungssystem nach Anspruch 1, **dadurch gekennzeichnet, dass** jeder Kanal (9, 11) jeweils einen Kanaleingang (12, 13) und jeweils einen Kanalausgang (7, 15) aufweist, dass die Kanaleingänge (12, 13) untereinander verbunden sind und dass die Kanalausgänge (7, 15) an das Ventilmittel (26) angeschlossen sind.

7. Druckmittel-Kraftübertragungssystem nach Anspruch 5 oder 7, **dadurch gekennzeichnet, dass** das Ventilmittel (26) ein Umschaltventil ist.

8. Druckmittel-Kraftübertragungssystem nach Anspruch 1, **dadurch gekennzeichnet, dass** einer der Kanäle (9, 11) ein als Sperrventil ausgebildetes Ventilmittel (16) enthält.

9. Druckmittel-Kraftübertragungssystem nach Anspruch 7, **dadurch gekennzeichnet, dass** das Ventilmittel (26) beim Umschalten zwischen den Kanälen (9, 11) einen allmählichen, gleitenden Übergang aufweist.

10. Druckmittel-Kraftübertragungssystem nach Anspruch 8, **dadurch gekennzeichnet, dass** das Ventilmittel (16) beim Schließen und beim Öffnen zwischen dem Schließzustand und dem Öffnungszustand einen allmählichen, glatten Übergang aufweist.

11. Druckmittel-Kraftübertragungssystem nach Anspruch 1, **dadurch gekennzeichnet, dass** das Ventilmittel (16, 26) mit einer Fluid-Betätigungseinrichtung (17) verbunden ist, die das Ventilmittel (16, 26) betätigt.

12. Druckmittel-Kraftübertragungssystem nach Anspruch 1, **dadurch gekennzeichnet, dass** die fluid-Betätigungseinrichtung (17) eine Eingangsleitung (19) aufweist, die zum Abgreifen des Steuer- und Betätigungsdrucks mit einer zu dem Ventilmittel (16, 26) führenden Leitung verbunden ist.

13. Druckmittel-Kraftübertragungssystem nach Anspruch 1, **dadurch gekennzeichnet, dass** die Fluid-Betätigungseinrichtung (17) ein der erzeugten Betätigungskraft entgegenwirkendes Federmittel (18) enthält.

14. Druckmittel-Kraftübertragungssystem nach Anspruch 1, **dadurch gekennzeichnet, dass** das Federmittel (18) eine lineare Kraft-Weg-Kennlinie aufweist.

15. Druckmittel-Kraftübertragungssystem nach Anspruch 1, **dadurch gekennzeichnet, dass** das Federmittel (18) eine nichtlineare Kraft-Weg-Kennlinie aufweist.

## Claims

1. A pressurized fluid power transmission system, particularly a hydraulic system (1), comprising
a pressurized fluid source (2) and a load (3) and
a damping device (4) which is arranged between the pressurized fluid source (2) and the load (3) and which has at least two channels (9, 11) extending parallel to one another and having different flow resistances; the channels (9, 11) connect the pressurized fluid source (2) with the load (3) and are controlled by a valve means (16, 26), which affects the fluid distribution in the channels (9, 11) dependent upon the pressure at a selected location of the power-transmission system, by closing the channel (9) having the lower flow resistance when the pressure in the damping device increases.

2. The pressurized fluid power transmission system as defined in claim 1, **characterized in that** at least one of the channels (9, 11) has a pulsation damper (21).

3. The pressurized fluid power transmission system as defined in claim 1, **characterized in that** both channels (9, 11) each have at least one pulsation damper (25, 21).

4. The pressurized fluid power transmission system as defined in claim 3, **characterized in that** the pulsation dampers (25, 21) have unlike pulsation damping properties.

5. The pressurized fluid power transmission system as defined in claim 1, **characterized in that** each channel (9, 11) has a respective channel inlet (12, 13) and a respective channel outlet (7, 15), that the channel outlets (7, 15) are connected with one another and that the channel inlets (12, 13) are connected with one another with the intermediary of the valve means (16).

6. The pressurized fluid power transmission system as defined in claim 1, **characterized in that** each channel (9, 11) has a respective channel inlet (12, 13) and a respective channel outlet (7, 15), that the channel inlets (12, 13) are connected with one another and that the channel outlets (7, 15) are connected to the valve means (26).

7. The pressurized fluid power transmission system as defined in claims 5 or 6, **characterized in that** the valve means (26) is a switch valve.

8. The pressurized fluid power transmission system as defined in claim 1, **characterized in that** one of the channels (9, 11) contains a valve means (16) formed as a shutoff valve.

9. The pressurized fluid power transmission system as defined in claim 7, **characterized in that** the valve means (26) has a gradual, smooth transition during switching between the channels (9, 11).

10. The pressurized fluid power transmission system as defined in claim 8, **characterized in that** the valve means (16) has a gradual, smooth transition during the closing and during the opening between the closed state and the open state.

11. The pressurized fluid power transmission system as defined in claim 1, **characterized in that** the valve means (16, 26) is connected with a fluid actuating device (17) which actuates the valve means (16, 26).

12. The pressurized fluid power transmission system as defined in claim 1, **characterized in that** the fluid actuating device (17) has an inlet conduit (19) which is connected with a conduit leading to the valve means (16, 26) for sensing the control pressure and the actuating pressure.

13. The pressurized fluid power transmission system as defined in claim 1, **characterized in that** the fluid actuating device (17) contains a spring means (18) opposing the generated actuating force.

14. The pressurized fluid power transmission system as defined in claim 1, **characterized in that** the spring means (18) has a linear force/displacement characteristic.

15. The pressurized fluid power transmission system as defined in claim 1, **characterized in that** the spring means (18) has a non-linear force/displacement characteristic.

## Revendications

1. Système de transmission des forces à fluide sous pression, en particulier un système hydraulique (1), comprenant :
une source de pression (2) et une charge (3) : ainsi que
un dispositif d'amortissement (4) agencé entre la source de pression (2) et la charge (3), lequel présente au moins deux canaux parallèles l'un à l'autre (9, 11) dotés de différentes résistances à l'écoulement et qui relient la source de pression (2) à la charge (3) et qui sont commandés par l'intermédiaire d'un moyen à soupape (16, 26),
**caractérisé en ce que** le système de transmission des forces à fluide sous pression influe sur la répartition des liquides sur les canaux (9, 11) en fonction de la pression à un endroit choisi du système de transmission des forces en bloquant le canal (9) présentant la résistance à l'écoulement plus basse lorsque la pression monte dans le dispositif d'amortissement.

2. Système de transmission des forces à fluide sous pression selon la revendication 1, **caractérisé en ce qu'**au moins l'un des canaux (9, 11) contient un amortisseur de pulsations (21).

3. Système de transmission des forces à fluide sous pression selon la revendication 1, **caractérisé en ce que** les deux canaux (9, 11) présentent respectivement au moins un amortisseur de pulsations (25, 21).

4. Système de transmission des forces à fluide sous pression selon la revendication 3, **caractérisé en ce que** les amortisseurs de pulsations (25, 21) présentent des caractéristiques d'amortissement de pulsation différentes.

5. Système de transmission des forces à fluide sous pression selon la revendication 1, **caractérisé en ce que** chaque canal (9, 11) présente respectivement une entrée de canal (12, 13) et respectivement une sortie de canal (7, 15), **en ce que** les sorties de canal (7, 15) sont reliées entre elles et **en ce que** les entrées de canal (12, 13) sont reliées l'une à l'autre par l'intermédiaire du moyen à soupape (16).

6. Système de transmission des forces à fluide sous pression selon la revendication 1, **caractérisé en ce que** chaque canal (9, 11) présente respectivement une entrée de canal (12, 13) et respectivement une sortie de canal (7, 15), **en ce que** les entrées de canal (12, 13) sont reliées entre elles et **en ce que** les sorties de canal (7, 15) sont raccordées au moyen à soupape (26).

7. Système de transmission des forces à fluide sous pression selon l'une ou l'autre des revendications 5 et 6, **caractérisé en ce que** le moyen à soupape (26) est une soupape d'inversion.

8. Système de transmission des forces à fluide sous pression selon la revendication 1, **caractérisé en ce que** l'un des canaux (9, 11) contient un moyen à soupape (16) réalisé comme soupape d'arrêt.

9. Système de transmission des forces à fluide sous pression selon la revendication 7, **caractérisé en ce que** le moyen à soupape (26) présente une transition progressive et continue pendant la commutation entre les deux canaux (9, 11).

10. Système de transmission des forces à fluide sous pression selon la revendication 8, **caractérisé en ce que** le moyen à soupape (16) présente une transition progressive et uniforme pendant la fermeture et pendant l'ouverture entre l'état de fermeture et l'état d'ouverture.

11. Système de transmission des forces à fluide sous pression selon la revendication 1, **caractérisé en ce que** le moyen à soupape (16, 26) est relié à un dispositif d'actionnement par liquide (17) qui actionne le moyen à soupape (16, 26).

12. Système de transmission des forces à fluide sous pression selon la revendication 1, **caractérisé en ce que** le dispositif d'actionnement par liquide (17) présente une conduite d'entrée (19) qui est reliée à une conduite menant vers le moyen à soupape (16, 26) pour saisir la pression de commande et d'actionnement.

13. Système de transmission des forces à fluide sous pression selon la revendication 1, **caractérisé en ce que** le dispositif d'actionnement par liquide (17) contient un moyen à ressort (18) agissant à l'encontre de la force d'actionnement générée.

14. Système de transmission des forces à fluide sous pression selon la revendication 1, **caractérisé en ce que** le moyen à ressort (18) présente une courbe caractéristique de force/trajet linéaire.

15. Système de transmission des forces à fluide sous pression selon la revendication 1, **caractérisé en ce que** le moyen à ressort (18) présente une courbe caractéristique de force/trajet non linéaire.
